**Europäisches Patentamt**

(19) **European Patent Office**

**Office européen des brevets**

(11) Veröffentlichungsnummer: **0 045 443**
**B1**

(12) # EUROPÄISCHE PATENTSCHRIFT

(45) Veröffentlichungstag der Patentschrift:
**15.02.84**

(51) Int. Cl.³: **B 23 B 41/00**

(21) Anmeldenummer: **81105796.7**

(22) Anmeldetag: **22.07.81**

(54) **Transportables Bohrgerät.**

(30) Priorität: **31.07.80 DE 3029128**

(43) Veröffentlichungstag der Anmeldung:
**10.02.82 Patentblatt 82/6**

(45) Bekanntmachung des Hinweises auf die Patenterteilung:
**15.02.84 Patentblatt 84/7**

(84) Benannte Vertragsstaaten:
**AT CH DE FR IT LI SE**

(56) Entgegenhaltungen:
**AT - B - 284 587**
**DD - A - 76 362**
**DD - A - 126 823**
**DE - A - 2 238 767**
**GB - A - 1 218 908**
**US - A - 1 928 514**
**US - A - 2 307 975**

(73) Patentinhaber: **SIEMENS AKTIENGESELLSCHAFT,**
**Berlin und München Wittelsbacherplatz 2,**
**D-8000 München 2 (DE)**

(72) Erfinder: **Kunert, Paul, Friedrich-Bauer-Strasse 1,**
**D-8520 Erlangen (DE)**

Transportables Bohrgerät

Die Erfindung betrifft ein transportables Bohrgerät der im Oberbegriff des Patentanspruchs 1 bezeichneten Art.

Bei grossen Wasserkraftgeneratoren, deren Läufernabe unmittelbar mit dem Wellenflansch einer Turbine gekuppelt ist, ist es wegen der Grösse der zu kuppelnden Teile erst am Aufstellungsort möglich, diese genau anzupassen und zusammenzubauen. Eine solche nachträgliche Anpassung ist deshalb erforderlich, weil sich beim Herstellungsprozess des Generatorläufers der Teilkreisdurchmesser der vorgefertigten, die Kupplungsbolzen aufnehmenden Passbohrungen um einige zehntel Millimeter deformiert. Es ist demzufolge notwendig, mit Hilfe eines transportablen Bohrgerätes die vorgefertigten Bohrungen von Läufernabe und Wellenflansch gemeinsam auf einen gewünschten Durchmesser aufzubohren.

Ein aus der DDR-Patentschrift 76 362 bekanntes transportables Bohrgerät ist zwar geeignet vorgefertigte Bohrungen verhältnismässig geringer Tiefe, also beispielsweise Lagerbohrungen in Getriebegehäusen, mit ausreichender Genauigkeit herstellen, nicht jedoch, wie es im vorliegenden Fall notwendig ist, Bohrungen grosser Tiefe von etwa 300 mm. Dazu ist dieses Bohrgerät vor allem wegen seines einfachen konzentrischen Vorschubantriebes in Verbindung mit dem erforderlichen grossen Spindelhub nicht mehr geeignet. Es kommt hinzu, dass dieser konzentrische Vorschubantrieb es unmöglich macht, das Bohrwerkzeug auf einfache und präzise Weise, nämlich mittels einer konischen Zentralbefestigung zu haltern und damit rasch und ohne erneutes Einstellen auszuwechseln.

Der Erfindung liegt die Aufgabe zugrunde, ein transportables Bohrgerät zu schaffen, mit dem vorgefertigte Bohrungen, insbesondere Bohrungen für die Kupplungsbolzen zur Verbindung der Nabe eines grossen Wasserkraftgenerators mit dem Flansch der zugehörigen Turbine in einem Arbeitsgang unter Einhaltung minimaler Toleranzen und mit möglichst geringem Zeitaufwand gemeinsam aufgebohrt werden können. Dabei soll das Bohrwerkzeug (Bohrkopf) auf einfache Weise und ohne erneutes Einstellen auswechselbar sein.

Diese Aufgabe wird durch die im Patentanspruch 1 angegebene Erfindung gelöst. Dadurch ist einmal erreicht, dass die Bohrspindel über den gesamten Bohrhub frei von radialen Kräften präzise geführt ist und dass zum anderen das Zentrum der Bohrspindel frei bleibt für eine zentrische Einspannvorrichtung, die ein schnelles Auswechseln des Bohrkopfes ohne erneutes Einstellen ermöglicht.

Es ist zwar aus der US-Patentschrift 23 07 975 bei einer Antriebsvorrichtung für eine Ständerbohrmaschine bereits bekannt, für den Vorschub einer Bohrspindel symmetrisch und achsparallel zu dieser zwei Vorschubspindeln anzuordnen, welche gelenkig mit der Bohrspindel verbunden sind. Diese Verbindung geschieht aber nicht über ein Pendelkugellager, das aussen auf die Spindel aufgesetzt ist, sondern am Kopfteil der Spindel. Dies hat zur Folge, dass das obere Spindellager kein einfach angeordnetes Gleitlager mehr sein kann, sondern dass eine zusätzliche komplizierte Parallelführung über die gesamte Hubhöhe für dieses Lager erforderlich wird. Ausserdem ist es nicht mehr möglich, das Werkzeug durch die Spindelachse zentral zu befestigen.

Vorteilhafte Weiterbildungen und Ausgestaltungen des Bohrgerätes nach Patentanspruch 1 sind in den Unteransprüchen gekennzeichnet.

Anhand eines in der Zeichnung dargestellten Ausführungsbeispiels wird die Erfindung im folgenden näher erläutert.

Es zeigen:

Fig. 1 schematisch einen Ausschnitt der Generatornabe im Querschnitt

Fig. 2 schematisch den entsprechenden Axialschnitt durch die Nabe und den Turbinenflansch

Fig. 3 einen Längsschnitt durch eine Ausführung des Feinbohrgerätes.

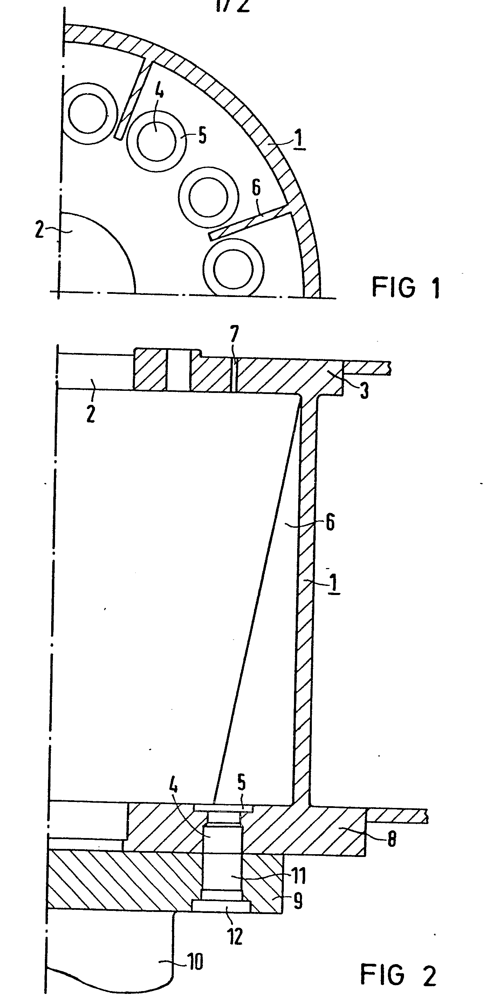

In den Figuren 1 und 2 ist als Beispiel ein Ausschnitt der Nabe 1 eines Wasserkraftgenerators dargestellt, dessen Läuferdurchmesser ca. zwölf Meter beträgt. Die Öffnung 2 des B-seitigen Nebenflansches 3 hat einen Durchmesser von 800 mm und die Bohrungen 4 zur Aufnahme der Kupplungsbolzen liegen auf einem Teilkreis mit einem Durchmesser von 1 650 mm. Der Durchmesser der vorgefertigten Bohrungen beträgt 178 mm und ist auf 180 mm bei einer Toleranz von maximal +0,029 mm aufzubohren. Zusätzlich ist für die Zylindrizität der Bohrung bei einer effektiven Bohrlänge von 300 mm eine Toleranz von weniger als 0,005 mm einzuhalten. Dabei soll die zulässige Abweichung von der Parallelität der Auflagefläche für Kupplungsbolzenmutter und Kupplungsbolzenkopf nicht mehr als 0,02 mm betragen.

Die Auflagefläche 5 für die Muttern der Kupplungsbolzen hat einen Durchmesser von 300 mm, so dass zwischen dem Umfang einer Auflagefläche 5 und einer dieser benachbarten Versteifungsrippe 6 ein Zwischenraum von maximal 15 mm verbleibt. Der Nabeninnenraum hat eine lichte Höhe von rund 2 m und einen lichten Durchmesser von 1 950 mm. Im B-seitigen Nabenflansch 3 sind Bohrungen 7 angeordnet, die mit den Kupplunsbolzenbohrungen 4 im A-seitigen Flansch 8 fluchten. Unterhalb des Flansches 8 sind der Flansch 9 der Turbinenwelle 10 und die entsprechenden vorgefertigten Bohrungen 11 mit der Auflagefläche 12 für den Bolzenkopf angedeutet. Wie ersichtlich ist der Raum für den Einsatz eines Feinbohrgerätes sehr beengt, so dass schon aus diesem Grund die bekannten Bohrgeräte nicht verwendet werden können.

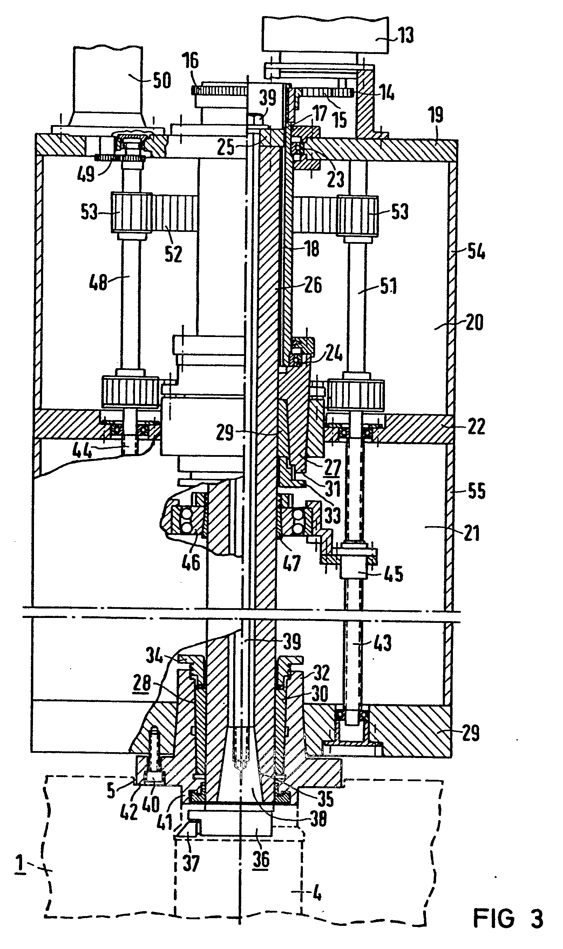

In Fig. 3 ist der prinzipielle Aufbau des erfindungsgemässen Feinbohrgerätes dargestellt. Ein Elektromotor 13 treibt über ein aus einem Ritzel 14, einem Zahnriemen 15 und einem Zahnrad 16 bestehendes Getriebe eine Hülse 17 an, deren Innenmantel mit achsparallelen Nuten 18 versehen ist und die im Deckel 19 des Gerätegehäuses und auf einem das Gehäuse in einem trockenen Raum 20 und einen Nassraum 21 unterteilenden Zwischenboden 22 gelagert ist (Kugellager 23, 24). Eine mit einer koaxialen Bohrung ausgeführte Bohrspindel 26 greift mit Mitnehmeransätzen 25 in die Nuten 18 der Hülse 17 ein, so dass die von der Hülse angetriebene Bohrspindel in axialer Richtung verschiebbar ist.

Die Bohrspindel ist in zwei nachstellbaren Gleitlagern 27, 28 im Bereich des Zwischenbodens 22 und des Gehäusebodens 29 geführt. Die Gleitlager bestehen im wesentlichen aus einer mit achsparallelen Schlitzen versehenen Hülse 29 bzw. 30, deren Innenmantelfläche zylindrisch und deren Aussenmantelfläche konisch gestaltet ist, und einer mit entsprechendem Gegenkonus ausgeführten, ortsfest angeordneten Lagerschale 31 bzw. 32, die mittels einer Schraubbuchse 33 bzw. 34 axial verschiebbar ist.

Die Innenbohrung der Spindel weitet sich zum Aufsetz-Ende des Gerätes konisch auf. Diese konische Aufweitung 35 dient zur Aufnahme eines ein Schneidwerkzeug 37 tragenden Bohrkopfes 36, dessen kegelstumpfförmiger Ansatz 38 mittels eines Schraubbolzens 39 in der Bohrspindel verspannbar ist. Die Lagerschale 32 ist durch Schrauben 40 am Gehäuseboden 29 befestigt. Mit Hilfe eines Ringansatzes 41, dessen Aussendurchmesser an den Durchmesser der vorgefertigten Bohrung 4 in der Nabe angepasst ist, lässt sich das Bohrgerät einwandfrei zentrieren. Der Flansch 42 der Lagerschale dient zum Aufsetzen des Bohrgerätes auf die Auflagefläche 5. Zusätzlich zur radialen Einstellbarkeit des Schneidwerkzeugs können zur Anpassung an unterschiedliche Durchmesser der aufzubohrenden Bohrungen der Bohrkopf 36 und die Lagerschale 32 ausgewechselt werden.

Symmetrisch zur Achse der Bohrspindel und achsparallel dazu sind zwei Vorschubspindeln 43, 44 angeordnet, die über Kugelgelenkmuttern 45 mit dem Aussenring eines Pendelkugellagers 46 verbunden sind, dessen Innenring über eine Flanschhülse 47 fest auf der Bohrspindel sitzt. Eine an die Vorschubspindel 44 angesetzte Antriebswelle 48 ist über ein Getriebe 49 an einen weiteren Motor 50 gekuppelt, während die Antriebswelle 51 der Vorschubspindel 43 mittels eines Zahnriementriebes 52, 53 von der Antriebswelle 48 angetrieben wird. Durch die Verwendung von Kugelgelenkspindeln ergibt sich eine ruckfreie, axiale Vorschubführung der Bohrspindel. Zur Begrenzung der Vorschubbewegungen sind nicht dargestellte Endschalter eingesetzt.

Das Gehäuse des Bohrgerätes ist durch mit dem Deckel 19, dem Zwischenboden 22 und dem Boden 29 verschweisste Blechmäntel 54, 55 vollkommen geschlossen. Vorteilhafterweise hat das Gehäuse im Querschnitt die Form eines Rechtecks mit an den Schmalseiten angesetzten Halbkreisen, deren Durchmesser dem Aussendurchmesser des Flansches 42 entspricht. Dadurch ist ein Einsatz des Bohrgerätes auch unter beengten Raumverhältnissen, z.B. in der Nabe eines Wasserkraftgenerators, möglich. Durch das Aufsetzen des Flansches auf die Auflagefläche 5 der Bohrungen in der Nabe wird eine einwandfreie Parallelität zwischen dieser Auflagefläche und der entsprechenden, von dem Schneidwerkzeug bearbeiteten Auflagefläche auf dem Turbinenflansch erzielt.

Mit Hilfe eines Dreibocks mit Flaschenzug kann das in der Nabe des Generators abgesetzte und auf seine Schwerpunktachse austarierte Bohrgerät auf die einzelnen Bohrungen abgesetzt werden. Zur Erleichterung des zentrischen Aufsetzens auf die jeweilige Bohrung wird vorteilhafterweise das Aufhängeseil des Flaschenzuges durch die Bohrung 7 im B-seitigen Flansch 3 der Nabe geführt.

Mit dem neuen Bohrgerät lassen sich Fertigbohrungen erzielen, deren Abweichungen hinsichtlich Zylindrizität und Planparallelität weit unter den geforderten Toleranzwerten liegen. Bei der als Beispiel gewählten Kupplung zwischen Turbine und Generator war die Abweichung von der Zylindrizität der Bohrungen kleiner als 0,005 mm und die Abweichung von der Planparallelität kleiner als 0,01 mm.

## Patentansprüche

1. Transportables Bohrgerät zum Feinbohren vorgefertigter Bohrungen mit einer Bohrspindel (26), deren eines Ende über ein Getriebe (14, 15, 16) an einen Motor (13) gekuppelt und in deren anderes Ende ein Bohrkopf (36) mit seitlich herausragendem Schneidwerkzeug (37) einsetzbar ist, mit einer den Vorschub der Bohrspindel bewirkenden Spindelanordnung (Vorschubspindel) mit eigenem Antrieb, mit einem Gehäuse, welches im Bereich des den Bohrkopf aufnehmenden Endes der Bohrspindel mit einem Flansch (42) zum Aufsetzen auf eine Auflagefläche versehen und mit einem an den Durchmesser der vorgefertigten Bohrung angepassten Zentrieransatz (41) ausgestattet ist, dadurch gekennzeichnet, dass der in radial nachstellbaren Lagern (27, 28) geführten Bohrspindel (26) zwei gleichartige, symmetrisch und achsparallel zu dieser angeordnete, gemeinsam angetriebene Vorschubspindeln (43, 44) zugeordnet sind, die über Kugelgelenkmuttern (45) mit dem Aussenring eines Pendelkugellagers (46) verbunden sind, dessen Innenring über eine Spannhülse (47) fest auf der Bohrspindel sitzt.

2. Bohrgerät nach Anspruch 1, dadurch gekennzeichnet, dass das bohrkopfseitige Lager (28) eine austauschbare Lagerschale (32) besitzt, deren aus dem Gehäuse des Bohrgerätes herausragendes Ende den Aufsetzflansch (42) und den Zentrieransatz (41) bildet.

3. Bohrgerät nach Anspruch 1 oder 2, dadurch gekennzeichnet, dass der Querschnitt seines Gehäuses (54, 55) rechteckförmig mit an den Schmalseiten angesetzten Halbkreisen ausgebildet ist, deren Durchmesser dem Aussendurchmesser des Flansches (42) entspricht.

**Revendications**

1. Outillage à forer transportable servant à réaliser l'alésage de précision de perçages réalisés d'avance, comportant une broche porte-foret (26), dont une extrémité est accouplée par l'intermédiaire d'une transmission (14, 15, 16) à un moteur (13) et dans l'autre extrémité de laquelle peut être insérée une tête d'alésage (36) comportant un outil de coupe (37) saillant latéralement, un ensemble à broche (broche d'avance) réalisant l'avance de la broche porte-foret et comportant un système propre d'entraînement, un boîtier qui, au voisinage de l'extrémité de la broche porte-foret logeant la tête de perçage est muni d'une bride (42) servant à l'application sur une surface d'appui, et est équipé d'un embout de centrage (41) adapté au diamètre du perçage réalisé d'avance, caractérisé par le fait qu'à la broche porte-foret (26) guidée dans des paliers (27, 28) ajustables radialement, sont associées deux broches d'avance (43, 44) identiques, disposées symétriquement par rapport à la broche porte-foret et parallèlement à l'axe de cette dernière et qui sont entraînées en commun et sont reliées, par l'intermédiaire d'écrous à rotule (45), à l'anneau extérieur d'un palier à rotule (46) dont l'anneau intérieur repose fermement par l'intermédiaire d'une douille de serrage (47) sur la broche porte-foret.

2. Outillage à forer suivant la revendication 1, caractérisé par le fait que le palier (28) situé du côté de la tête de perçage possède une coque de palier (32) pouvant être remplacée dont l'extrémité, qui fait saillie hors du boîtier de l'outillage à forer, forme la bride d'application (42) et l'embout de centrage (41).

3. Outillage à forer suivant la revendication 1 ou 2, caractérisé par le fait que la section transversale de son boîtier (54, 55) est réalisée avec une forme rectangulaire, avec des demi-cercles placés sur les petits côtés et dont le diamétre correspond au diamètre extérieur de la bride (42).

**Claims**

1. A transportable drilling device for the precision drilling of prefabricated bores, comprising a drill spindle (26), one end is coupled to a motor (13) by means of a gearing (14, 15, 16) and into the other end of which a drill head (36), having a laterally protruding cutting tool (37), can be inserted; a spindle arrangement (advancing spindle) which effects the advancing of the drilling spindle and has a separate drive means; and a housing which in the region of the end of the drilling spindle which receives the drill head, is provided with a flange (42) for placing the drilling device onto a contact surface, said housing being provided with a centering attachment (41) which is adapted to the diameter of the prefabricated drill hole, characterised in that the drill spindle (26), which is guided in radially adjustable bearings (27, 28), is assigned two similar, commonly driven advancing spindles (43, 44) which are symmetrically arranged and are axially parallel to the drill spindle (26) and which are connected by ball-and-socket nuts to the outer ring of a self-aligning ball bearing (46), the inner ring of which is firmly fixed to the drill spindle by means of a clamping sleeve (47).

2. A drilling device according to Claim 1, characterised in that the bearing (28) at the drill head end has an interchangeable bearing seat (32), the end of which projecting from the housing of the drilling device formes the contact flange (42) and the centering attachment (41).

3. A drilling device according to Claim 1 or Claim 2, characterised in that the cross-section of its housing (54, 55) is rectangular with semicircles at the narrow sides, the diameter of which semicircles corresponds to the external diameter of the flange (42).

FIG 1

FIG 2

FIG 3